# EUROPÄISCHE PATENTSCHRIFT

(11) **EP 0 831 282 B1**
(45) Veröffentlichungstag und Bekanntmachung des Hinweises auf die Patenterteilung: **17.04.2002**
(21) Anmeldenummer: 97113737.7
(22) Anmeldetag: 08.08.1997
(51) Int. Cl.: F24H 3/00, F24H 9/02, F24D 19/04

(54) **Heizkehrleiste für die Installation von Heizsystemen, Klimatisierungssystemen und von elektrischen- und/oder Antennenleitungen**
Baseboard heater for installing heating- or air conditioning systems and electrical- and/or antenna wires
Plinthe chauffante pour installer des systèmes de chauffage our d'air conditionné et des cables pour électricité et/ou antenne

(30) Priorität: 23.09.1996 IT BZ960041
(43) Veröffentlichungstag der Anmeldung: 25.03.1998
(73) Patentinhaber: Hemo Srl, 39100 Bolzano (IT)
(72) Erfinder: Waldner, Helmuth, 39012 Merano (Bolzano) (IT)
(74) Vertreter: Oberosler, Ludwig

(56) Entgegenhaltungen:
- WO-A-93/04321
- BE-A- 529 599
- DE-A- 1 454 341
- FR-A- 2 222 627

## Beschreibung

Es sind Heizkehrleisten bekannt, wie z.B. WO-A-9304321, deren Konvektoren aus einer Vielzahl von Lamellen bestehen, welche an vom Heizwasser durchflossenen Rohren oder elektrischen Heizwiderständen befestigt sind und durch ein Profil mit Öffnungen für den Luftdurchfluß abgedeckt und geschützt sind. Die bekannten Halterungen für diese Konvektoren befestigen die Rohre und die Lamellen ohne jedoch die lästigen Geräusche, welche durch die unterschiedlichen Wärmeausdehnung der einzelnen Komponenten, insbesondere der Lamellen, hervorgerufen werden, zu unterbinden. Es ist weiters bekannt, an besagter Halterung eine Befestigung für die elektrische Zuleitung für den eventuellen Heizwiderstand vorzusehen.

Die Erfindung stellt sich die Aufgabe, eine Heizkehrleiste der eingangs beschriebenen Art zu schaffen, wobei die einzelnen Komponenten derart beschaffen sind, daß keine der durch Unterschiede in der Wärmeausdehnung hervorgerufenen Geräusche erzeugt werden. Sie soll außerdem geeignet sein, mindestens eine elektrische Leitung zu installieren und die Möglichkeit bieten, an jedem beliebigen Punkt der Längserstreckung der Kehrleiste elektrische Steckdosen und/oder Antennensteckdosen vorzusehen. Weiterhin soll die Heizkehrleiste eine geeignete Form aufzuweisen, um als Auslaufkanal eines im Fußbodenbereich vorgesehenen Kanals einer Klimaanlage zu wirken.

Zur Lösung dieser Aufgabe schlägt die Erfindung einen Halter vor welcher Klips für die Befestigung der Konvektorrohre durch Eindrücken, Sitze für das Aufschnappen von elektrischen Installationskanälen sowie von vertikalen Abzweigskanälen für elektrische Steckdosen, Antennendosen und/oder Telefonanschlußdosen aufweist, weiters sind Leitelemente für den Luftdurchsatz und Lamellen mit elastischem Ausgleich der durch die Wärmeausdehnung hervorgerufenen Verformungen vorgesehen.

Gemäß einer Weiterentwicklung des Erfindungsgedankens sind die Halterungselemente so geformt, daß eine einfache und schnelle Montage und Demontage der Teile, ohne Einsatz spezifischer Werkzeuge, möglich ist.

Die Halterung für die erfindungsgemäße Kehrleiste weist mindestens einen Sitz zum Aufklipsen eines Rohres oder eines Elektrowiderstandes für den zu installierenden Konvektor auf. Die Form der, diesen Aufklipsitz bildenden, Backen ist erfindungsgemäß so, daß diese während des Einsetzens des Konvektors eine seitliche elastische Verbiegung der Lamellen bewirken, welche sich elastisch seitlich an besagte Backen anlegen. Die Konvektorlamellen weisen, sei es gegen die Oberfläche an welcher die Kehrleiste montiert wird, sei es gegen das Abdeckprofil, Fortsätze auf welche in einem Winkel von etwas mehr als 90° abstehen und so, sei es an der Montagewand, als auch gegenseitig gegen die Innenfläche des Abdeckprofils sich unter elastischer Verformung anlegen um so, auch während der Wärmeausdehnung der Lamellen, die Wärmeübertragung zu sichern. Um dem Auftreten lästiger Geräusche, welche sich durch die Bewegung der Lamellen an den Auflageflächen bilden könnten vorzubeugen, sieht die Erfindung eine Abdeckung der Oberflächen mit einem hitzebeständigen Lack oder dergleichen oder das Aufbringen eines hitzebeständigen Films vor. Um die Lamellen des Konvektors, insbesondere wenn keine Rohre vorgesehen sind, zusätzlich zu stabilisieren, schlägt die Erfindung vor, an den Lamellen Kerben vorzusehen in welche Verbindungs- und Stabilisierungsleisten aus Metall oder aus Kunststoff mit Druck eingesetzt werden und welche ihrerseits in entsprechende Sitze an den Vorsprüngen der Halterung eingeklipst werden. Vorzugsweise im unteren, nicht der Warmluft ausgesetzten, Bereich der Halterung für das Kehrleistenprofil sind Aufnahmen für die Anbringung von mindestens einem Installationskanal für eine elektrische Leitung, für eine Telefon- und/oder eine Antennenleitung vorgesehen.

Außen am Abdeckprofil kann ein vertikaler Installationskanal angebracht werden, welcher eine Abzweigung zu einer oder zu mehreren Über dem Kehrleistenprofil liegenden Elektro-, Telefon- und/oder Antennensteckdosen ermöglicht

Die Erfindung wird anhand eines in den beiliegenden Zeichnungen schematisch dargestellten vorzuziehenden Ausführungsbeispieles näher erklärt; dabei erfüllen die Zeichnungen nur erklärenden, nicht begrenzenden Zweck.

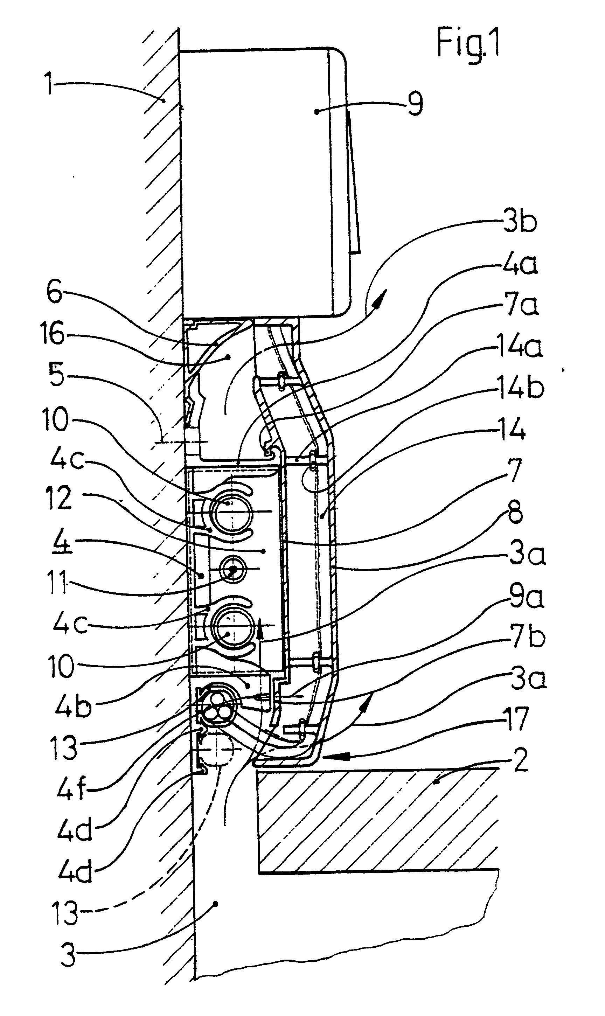

Die Fig. 1 zeigt einen Querschnitt durch eine erfindungsgemäße Heizkehrleiste im Bereich eines vertikalen Installationskanales und einer Elektrosteckdose sowie mit Darstellung des Luftdurchsatzes einer im Fußboden verlegten Klimaanlage.

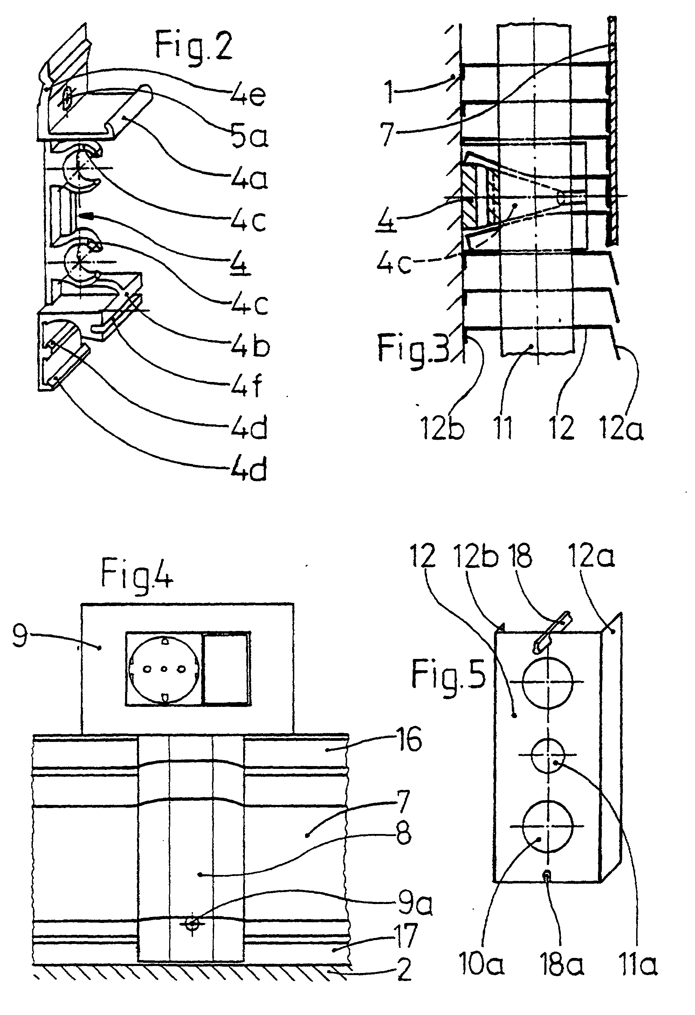

Die Fig. 2 zeigt die perspektivische Darstellung durch eine Halterung für das erfindungsgemäße Heizkehrleistenprofil.
Die Fig. 3 ist eine Draufsicht auf den Konvektor einer erfindungsgemäßen Heizkehrleiste in einer an der Halterung eingesetzten Position, wobei in einem Bereich die elastisch verformten Lamellen zwischen Montagefläche und dem Abdeckprofil und in einem anliegenden Bereich die Lamellen in unverformtem Zustand gezeigt werden.
Die Fig. 4 zeigt die Vorderansicht eines vertikalen, erfindungsgemäßen Installationskanales samt am Kehrleistenprofil angebrachter Steckdose.
Die Fig. 5 zeigt in perspektivischer Darstellung eine Konvektorlamelle mit einer unter Druck eingesetzten Stabilisierungsleiste.

An der vertikalen Wand 1 ist die Halterung 4, welche im oberen Bereich einen Flansch zwecks Einsatz eines Ableitprofiles 6 aufweist, mittels Schrauben 5 befestigt. Raumseitig ragt im oberen Bereich ein Einhängflansch 4a für die Einrastrille 7a des Abdeckprofiles 7 ab, während im unteren Bereich ein Befestigungsflansch 4b für die Befestigung des Abdeckprofils 7 mittels Schraube 9a vorgesehen ist. Zwischen besagten Flanschen 4a und 4b stehen zwei Klips 4c mit elastischen Backen, zwecks Aufnahme durch Eindrücken der Konvektorrohre 10 samt Lamellen 12, ab. Im unteren Bereich weist die Halterung 4 Befestigungselemente 4d für die Anbringung mindestens eines Installationskanales 13 für Netzstrom, Telefon und/oder Antennen auf.

Es ist möglich, an jeder beliebigen Stelle der Längsausdehnung des Abdeckprofiles 7 einen vertikalen Abzweigkanal 8 samt mindestens einer Steckdose anzubringen; dabei ist die Steckdose über dem Ableitprofil 6 befestigt. Der vertikale Kanal 8 weist an seiner Innenseite Abstandhalter 14a auf, an welchen die Halteelemente 14b für die eventuell mit reflektierender Abdeckhülle versehenen Kabel 14 aufgedrückt oder aufgeschnappt werden. Das Abdeckprofil 7 ist derart geformt und hat entsprechende Ausmaße, daß in der Nähe des Fußbodens 2 eine freie Öffnung für den Durchsatz der Kaltluft 17 und im oberen Bereich eine freie Öffnung für den Durchsatz der Warmluft 3b vorgesehen ist. Die Lamellen 12, welche zusammen mit den Rohren 10 und/ oder dem Elektrowiderstand 11 den Konvektor bilden, weisen gegen die Wand 1 einen Fortsatz 12b und gegen die Innenfläche des Abdeckprofils 7 einen Fortsatz 12a auf; die Ausmaße der Lamellen 12 und die Abwinkelung der Fortsätze 12a und 12b sind derart, daß in Montagestellung die Lamellen elastisch verformt werden und einen leichten Druck gegen die Auflageflächen ausüben, wodurch die Wärmeübertragung begünstigt wird und eventuelle Geräusche, welche durch die Wärmeausdehnung, insbesondere während des Temperaturanstieges und Temperaturabfalles, auftreten würden, verhindert werden. Erfindungsgemäß können die Kontaktflächen zwischen den Lamellenfortsätzen 12a, 12b und dem Abdeckprofil 7, beziehungsweise der Wand 1, durch wärmebeständigem Lack oder Laminate abgedeckt werden, um zusätzlich das Auftreten von durch Wärmeausdehnung hervorgerufenen Geräuschen zu vermeiden.

Die Backen der Klips 4c haben konische sich gegen die freien Enden verjüngende Form, so daß sie sich keilartig zwischen die Lamellen 12 des Konvektors schieben können, um diese elastisch auseinanderzuspreizen, und so die Montage zu erleichtern sowie Wärmeausdehnungsgeräusche zu vermeiden. Um den Lamellen 12 des Konvektors, insbesondere in Abwesenheit der Rohre 10, mehr Stabilität zu verleihen, können in Kerben 18a an den Lamellen Verbindungs- und Stabilisierungsleisten 18 eingedrückt werden. Die Leisten 18 schnappen ihrerseits in entsprechende Aufnahmen an den Einhängeflanschen 4a, 4b.

Gemäß einer Weiterentwicklung der Erfindung kann die Heizkehrleiste als Austrittskanal für die, über einen im Fußboden 3 in Kehrleistennähe verteilten Luft 3a, 3b einer Klimaanlage, dienen.

## Patentansprüche

1. Heizkehrleiste, welche aus einem Konvektor (10, 11, 12) und einem Abdeckprofil (7) besteht, und mit einer Halterung (4) zur Befestigung der Heizkehrleiste an der Wand, wobei die Halterung (4) im oberen Bereich einen Flansch (4e) zum Aufschnappen eines Ableitprofils (6) aufweist, und die selbe Halterung (4) raumseitig einen Einhängflansch (4a) und einen Befestigungsflansch (4b) für das Abdeckprofil (7) aufweist, **dadurch gekennzeichnet, daß** zwischen diesen Flanschen (4a, 4b) mindestens ein Klips (4c) für das Aufschnappen des Konvektors (10, 11, 12) vorgesehen ist und daß im unteren Bereich Einsteck- oder Einschnappverbindungen (4d) zwecks Anbringung von mindestens einem Installationskanal (13) für Netzstrom, Telefon und/oder Antennen vorgesehen ist.

2. Heizkehrleiste gemäß Patentanspruch 1, **dadurch gekennzeichnet daß** der Konvektor von Lamellen (12) gebildet wird, wobei die Lamellen im Kontaktbereich längs der Wand (1) und/oder längs der Innenfläche des Abdeckprofils (7) Fortsätze (12a, 12b) aufweisen, welche derartige Form und Ausmaße haben, daß sie beim Aufsetzen des Abdeckprofils (7) elastisch verformt werden, um so auch während der Wärmeausdehnung den Kontakt zu sichern, und daß die Kontaktflächen der Fortsätze und/oder des Abdeckprofils (7), beziehungsweise jene der Wand (1), mit wärmebeständigen Lacken oder Laminaten,abgedeckt sind.

3. Heizkehrleiste gemäß Patentanspruch 2, **dadurch gekennzeichnet, daß** die freien Enden der Klips (4c) keilförmig sind, um während der Montage des Konvektors dessen Lamellen (12) elastisch auseinander zu spreizen.

4. Heizkehrleiste gemäß Patentanspruch 1, **dadurch gekennzeichnet, daß** außen am Abdeckprofil (7) ein vertikaler Installationskanal (8) für eine Abzweigung der Elektro-, Telefon- und/oder Antennenleitung samt Steckdose (9) angebracht werden kann und daß an der Innenseite dieses Kanals (8) Abstandshalteelemente (14a) vorgesehen sind, an welchen Halteelemente (14b) für die eventuell durch ein abstrahlen des und/oder isolierendes Laminat abgedeckten Kabel (14) aufgedrückt oder aufgeschnappt werden.

5. Heizkehrleiste gemäß Patentanspruch 1, **dadurch gekennzeichnet, daß** insbesondere das Abdeckprofil (7) sowie das Ableitprofil (6) als Austrittsöffnung für die Luft einer Klimaanlage wirkt, welche über einen im Fußboden (3) vorgesehenen Kanal zugeleitet wird.

## Claims

1. Heating return strip which consists of a convector (10, 11, 12) and of a cover profile (7), and with a holding device (4) for fastening the heating return strip to the wall, the holding device (4) having in the upper region a flange (4e) for snapping on a deviation profile (6), and the same holding device (4) having on the room side a suspension flange (4a) and a fastening flange (4b) for the cover profile (7), **characterized in that** at least one clip (4c) for snapping on the convector (10, 11, 12) is provided between these flanges (4a, 4b), and **in that** plug-in or snap-in connections (4d) for the purpose of mounting at least one installation duct (13) for mains power, telephone and/or antennas are provided in the lower region.

2. Heating return strip according to Patent Claim 1, **characterized in that** the convector is formed by lamellae (12), the lamellae having, in the contact region along the wall (1) and/or along the inner face of the cover profile (7), extensions (12a, 12b) which have a shape and dimensions such that, when the cover profile (7) is put in place, they are deformed elastically, in order thereby to ensure contact, even during thermal expansion, and **in that** the contact faces of the extensions and/or of the cover profile (7) or those of the wall (1) are covered with heat-resistant lacquers or laminates.

3. Heating return strip according to Patent Claim 2, **characterized in that** the free ends of the clips (4c) are wedge-shaped, in order, during the mounting of the convector, to spread the lamellae (12) of the latter elastically apart from one another.

4. Heating return strip according to Patent Claim 1, **characterized in that** a vertical installation duct (8) for a branch-off of the electricity, telephone and/or antenna line, together with plug socket (9), can be mounted on the cover profile (7) on the outside, and **in that** on the inside of this duct (8) are provided spacer elements (14a), on which holding elements (14b) for the cables (14) covered, if appropriate, by a radiating and/or insulating laminate are pressed or snapped.

5. Heating return strip according to Patent Claim 1, **characterized in that**, in particular, the cover profile (7) and also the deviation profile (6) act as an outlet orifice for the air of an air-conditioning system which is delivered via a duct provided in the floor (3).

## Revendications

1. Plinthe chauffante, constituée d'un convecteur (10, 11, 12) et d'un profilé de recouvrement (7), et avec une fixation (4) pour assurer la fixation de la plinthe sur la paroi ou mur, la fixation (4) présentant, dans la zone supérieure, un rebord (4e) pour le montage par encliquetage d'un profilé d'évacuation (6), et la même fixation (4) présentant, côté pièce, un rebord d'accrochage (4a) et un rebord de fixation (4b) pour un profil de recouvrement (7), **caractérisée en ce qu'**entre ces rebords (4a, 4b) est prévue au moins une attache (4c) pour le montage par encliquetage du convecteur (10, 11, 12), et **en ce que**, dans la zone inférieure, sont prévues des liaisons par enfichage ou encliquetage (4d), dans le but d'un montage d'au moins un canal d'installation (13) pour le réseau électrique, le téléphone et/ou des antennes.

2. Plinthe chauffante selon la revendication 1, **caractérisée en ce que** le convecteur est formé par des lamelles (12), les lamelles (12) présentant, dans la zone de contact le long de la paroi (1) et/ou le long de la surface intérieure du profilé de recouvrement (7), des prolongements (12a, 12b) qui ont une forme et des dimensions faisant que, lors de l'application du profilé de recouvrement (7), ils sont déformés élastiquement afin d'assurer ainsi le contact également pendant la dilatation thermique, et **en ce que** les surfaces de contact du prolongement et/ou du profilé de recouvrement (7), respectivement celle de la paroi (1), sont couvertes par des vernis ou des laminés résistant à la chaleur.

3. Plinthe chauffante selon la revendication 2, **caractérisée en ce que** les extrémités libres de l'attache (4c) sont en forme de coin pour, pendant le montage du convecteur, écarter élastiquement les unes des autres ses lamelles (12).

4. Plinthe chauffante selon la revendication 1, **caractérisée en ce que**, extérieurement sur le profilé de recouvrement (7), peut être monté un canal d'installation (8) vertical pour une ramification de la ligne électrique téléphonique et/ou d'antenne avec une prise de raccordement (9), et **en ce que**, sur la face intérieure de ce canal (8), sont prévus des éléments d'espacement (14a), sur lesquels sont montés, par pression ou encliquetage, des éléments de maintien (14b) pour les câbles (14), éventuellement couverts par un laminé à effet blindant ou écrantant et/ou isolant.

5. Plinthe chauffante selon la revendication 1, **caractérisée en ce qu'**en particulier le profilé de recouvrement (7), ainsi que le profilé d'évacuation (6), agissent comme ouverture de sortie pour l'air d'une installation de climatisation, air ayant été amené par un canal prévu dans le plancher (3).
